## Europäisches Patentamt
## European Patent Office
## Office européen des brevets

(19)

(11) Veröffentlichungsnummer: **0 059 273**
**B1**

(12)

# EUROPÄISCHE PATENTSCHRIFT

(45) Veröffentlichungstag der Patentschrift:
**24.07.85**

(51) Int. Cl.⁴: **F 16 C 33/12**

(21) Anmeldenummer: **81201356.3**

(22) Anmeldetag: **11.12.81**

(54) **Verbundgleitlager.**

(30) Priorität: **26.02.81 DE 3107237**

(43) Veröffentlichungstag der Anmeldung:
**08.09.82 Patentblatt 82/36**

(45) Bekanntmachung des Hinweises auf die Patenterteilung:
**24.07.85 Patentblatt 85/30**

(84) Benannte Vertragsstaaten:
**AT DE FR GB IT**

(56) Entgegenhaltungen:
**FR - A - 1 153 529**
**FR - A - 1 263 025**
**GB - A - 729 761**
**US - A - 2 586 100**

(73) Patentinhaber: **KOLBENSCHMIDT Aktiengesellschaft, Christian-Schmidt-Strasse 8/12 Postfach 1351, D-7107 Neckarsulm (DE)**

(72) Erfinder: **Pfestorf, Harald, Dipl.-Ing, Panoramastrasse 18/1, D-7101 Untereisesheim (DE)**

(74) Vertreter: **Fischer, Ernst, Dr., Reuterweg 14, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verbundgleitlager für hochbelastete Triebwerke von Brennkraftmaschinen, insbesondere für aufgeladene Dieselmotoren, bestehend aus einem Stahlstützrücken, einer darauf aufgebrachten Aluminium-Lagerlegierungsschicht des Typs AlSi12CuMgNi, AlSn6Cu, AlZn5SiCuPb oder vorzugsweise AlZn4,5SiCuPb, und einer Laufschicht.

Bei der Weiterentwicklung von Diesel-Saugmotoren durch Aufladung steigen auch die Anforderungen an das Triebwerk. Hier sind insbesondere die Pleuellager durch die höheren Gaskräfte sehr stark belastet. In den meisten Fällen ist es nicht möglich, die Abmessungen der Pleuellager nennenswert zu vergrössern und damit deren spezifische Belastung auf den bei Saugmotoren üblichen Wert zu reduzieren. Die als Folge davon auftretenden Schädigungen der Gleitlager begrenzen die Standzeit des Motors in unzulässiger Weise. So stellt sich als Detailproblem bei der Entwicklung aufgeladener Dieselmotoren die Aufgabe, Pleuellager mit höherer Ermüdungsfestigkeit und besserem Verschleisswiderstand zu konzipieren.

So wurde u.a. versucht, die Ermüdungsfestigkeit von Pleuellagern mit Stahlrücken einem Lagerwerkstoff aus einer Blei-Bronze-Legierung und einer galvanisch aufgebrachten Laufschicht den gestiegenen Anforderungen anzupassen. Dabei wurde als erste Massnahme die Dicke der galvanisch aufgebrachten Gleitschicht reduziert. Dies brachte eine höhere Ermüdungsfestigkeit speziell der Laufschicht. Das Problem des hohen Verschleisses war damit aber nicht gelöst. Als Folge stellten sich Lagerschäden ein, wenn die Blei-Bronze-Legierung zum Tragen kam. Durch Anheben des Kupferanteils in der Laufschicht von ca. 3% auf ca. 6% versuchte man, den Verschleisswiderstand zu verbessern. Diese Massnahme hat teilweise zu längeren Standzeiten der Pleuellager geführt. Es konnten jedoch nicht in allen Fällen zufriedenstellende Laufergebnisse erzielt werden.

· Eine höhere Ermüdungsfestigkeit und sehr gute Gleiteigenschaften, auch nach Verschleiss der Laufschicht, weisen Verbundgleitlager auf, die aus einem Stahlrücken als Stützschale, die die Ermüdungsfestigkeit des Lagerwerkstoffs erhöht, einer darauf aufplattierten Schicht einer Aluminium-Lagerlegierung und einer darauf galvanisch abgeschiedenen dünnen Laufschicht aus Blei- oder Zinn-Legierungen von 3 bis 30 μm Dicke bestehen, wobei in aller Regel zwischen der Schicht der Aluminium-Lagerlegierung und der Laufschicht eine Nickel-Zwischenschicht angeordnet ist, um eine einwandfreie Haftung der Laufschicht auf der Aluminium-Lagerlegierung zu gewährleisten (Technisches Handbuch, Karl Schmidt GmbH, Neckarsulm 1967, S. 231/232).

Für den genannten Zweck kommen als Aluminium-Lagerlegierung insbesondere diejenigen der Gruppen AlSi12CuMgNi, AlZn5SiCuPb und AlZn4,5SiCuPb in Betracht. Bei diesen Legierungen sind in einer aus Aluminium-Mischkristallen bestehenden Grundmasse feinverteilte heterogene harte Silizide und Aluminide eingelagert. Diese Legierungen zeichnen sich durch geringe Verschleissraten und hohe Ermüdungsfestigkeit aus und besitzen gegenüber gehärteten Zapfen ein ausgezeichnetes Gleitverhalten.

Es ist die Aufgabe der vorliegenden Erfindung, das Verbundgleitlager der vorstehend beschriebenen Ausführungsform so zu konzipieren, dass eine gleichmässige Verteilung der Belastung der Aluminium-Lagerlegierung erfolgt und seine Herstellung mit einem möglichst geringen Material- und Fertigungsaufwand durchführbar ist.

Die Lösung dieser Aufgabe besteht darin, dass auf der Aluminium-Lagerlegierungsschicht eine Zink-Phosphat-Schicht von 2 bis 8 μm Dicke abgeschieden ist.

Die Zink-Phosphat-Schicht ist aufgrund ihrer sehr guten Anpassungsfähigkeit in der Lage, örtliche Lastspitzen abzubauen. Sie sorgt damit für eine gleichmässige Verteilung der Belastung auf den eigentlichen Lagerwerkstoff. Dies ist besonders bei den harten und verschleissfesten Aluminium-Lagerlegierungen von Vorteil, da bei einer Serienfertigung geometrische Ungenauigkeiten, z.B. Fluchtungsfehler, nie ganz ausgeschlossen werden können. Die im Vergleich zum Lagerwerkstoff geringere Verschleissfestigkeit der Phosphatschicht begünstigt weiterhin den Einlaufvorgang.

Aus der FR-A-1 263 025 ist zwar ein Gleitlager aus einer Aluminiumlegierung mit einer Zink-Phosphat-Laufschicht bekannt, die jedoch dem Korrosionsschutz dient.

Das Verfahren zur Herstellung der Zink-Phosphat-Überzüge wird in der Weise durchgeführt, dass nach dem Reinigen der aus Stahlstützschale und Aluminium-Lagerlegierungsschicht bestehenden Lagerschale das Auftragen des Zink-Phosphat-Überzugs in einer aus primären Zink-Phosphaten in verdünnter Phosphorsäure bestehenden 60 bis 80°C warmen Lösung erfolgt und anschliessend mit Wasser von einer Temperatur von 40 bis 60°C gespült wird. Die Phosphatierungsbäder sind lange Zeit verwendbar, wenn die durch die Schichtbildungsreaktion und den mechanischen Austrag eingetretenen Verluste an Phosphatierungschemikalien regelmässig ersetzt werden. Verdampfungsverluste müssen durch Zugabe von Wasser ausgeglichen werden. Die zur Aufrechterhaltung der Badkonzentration erforderlichen Mengen an Ergänzungschemikalien werden aus den durch Titration erhaltenen Analysendaten ermittelt.

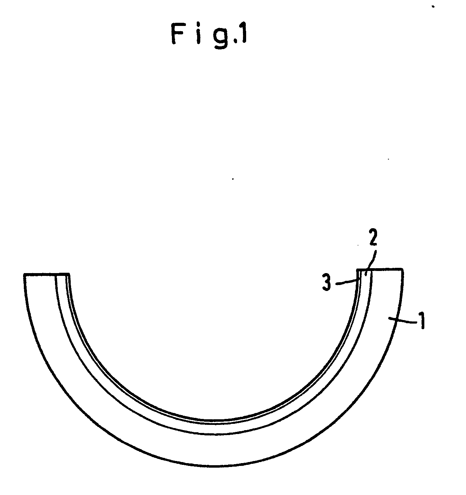

Das erfindungsgemäss beschichtete Verbundgleitlager besteht gemäss der Zeichnung aus einer Stahlstützschicht 1 und einer darauf aufgebrachten Aluminium-Lagerlegierungsschicht 2 des Typs AlZn4,5SiCuPb, auf der ein Zink-Phosphat-Überzug 3 aufgetragen ist, um eine gewisse Anpassungsmöglichkeit während des Einlaufvorgangs zu gewährleisten. Die Verbundgleitlager wurden anschliessend in das Pleuellager eingesetzt. Die Gleitflächen der Lager waren auch nach mehreren 100 Stunden Laufzeit bei vorwiegend Vollastbetrieb glatt und völlig frei von Schädigungen. Die Ergebnisse aus diesem Versuch zeigen eindeutig, dass die erfindungsgemäss gestalteten Verbundgleitlager sehr gute Gleiteigenschaften bei hoher Belastbarkeit und minimalem Verschleiss besitzen.

**Patentansprüche**

1. Verbundgleitlager für hochbelastete Triebwerke von Brennkraftmaschinen, insbesondere für aufgeladene Dieselmotoren, bestehend aus einem Stahlstützrücken, einer darauf aufgebrachten Aluminium-Lagerlegierungsschicht des Typs AlSi12CuMgNi, AlSn6Cu, AlZn5SiCuPb oder vorzugsweise AlZn4,5SiCuPb, und einer Laufschicht, dadurch gekennzeichnet, dass auf der Aluminium-Lagerlegierungsschicht (2) eine Zink-Phosphat-Laufschicht (3) von 2 bis 8 µm Dicke abgeschieden ist.

2. Verfahren zur Herstellung des Verbundgleitlagers nach Anspruch 1, dadurch gekennzeichnet, dass die Aluminium-Lagerlegierungsschicht auf den Stahlrücken aufplattiert und dieser Verbundwerkstoff nach dem Reinigen einem 60 bis 80 °C warmen Zink-Phosphat-Bad zugeführt und nach erfolgter Beschichtung in einem 40 bis 60 °C warmen Wasserbad gespült wird.

**Claims**

1. Composite sliding surface bearing for heavy-duty power trains of internal combustion engines, particularly supercharged diesel engines, consisting of a steel backing, an aluminum bearing alloy layer of the type AlSi12CuMgNi, AlSn6Cu, AlZn5SiCuPb or preferably AlZn4, 5SiCuPb applied to said backing and an antifriction layer, characterized in that a zin-phosphate conversion coating of a thickness of 2 to 8 micrometers is formed on the aluminum bearing alloy layer (2) as the antifriction layer (3).

2. Process of manufacturing the composite sliding-surface bearing according to claim 1, characterized in that a process of manufacturing the three-layer composite sliding surface bearing according to claim 1, characterized in that the aluminum bearing alloy layer is clad onto the steel backing and the resulting composite is cleaned and then dipped into a zinc phosphate-containing bath at 60 to 80+ °C and after having been conversion coated is rinsed in a water bath at 40 to 60 °C.

**Revendications**

1. Palier lisse composite pour blocs-moteurs fortement chargés de machines à combustion interne, notamment pour des moteurs Diesel à suralimentation, constitué d'un dos d'appui en acier, d'une couche en alliage d'aluminium pour palier du type AlSi12CuMgNi, AlSn6Cu, AlZn5SiCuPb ou de préférence AlZn4, 5SiCuPb, qui est déposée dessus, et d'une couche de roulement, caractérisé en ce que sur la couche d'alliage pour palier en aluminium (2) est déposée une couche de roulement (3) en phosphate de zinc de 2 à 8 µm d'épaisseur.

2. Procédé de fabrication du palier lisse composite suivant la revendication 1, caractérisé en ce qu'il consiste à plaquer sur le dos en acier la couche en alliage pour palier d'aluminium et à envoyer ce matériau composite, après le nettoyage, à un bain chaud de phosphate de zinc à une température de 60 à 80 °C et après que le revêtement a été effectué, à le rincer dans un bain-marie chaud à une température comprise entre 40 et 60 °C.

# Fig.1